# EUROPEAN PATENT APPLICATION

(11) **EP 0 602 591 A1**
(43) Date of publication of application: **22.06.1994**
(21) Application number: 93120127.1
(22) Date of filing: 14.12.1993
(51) Int. Cl.: F02M 35/16, B60K 13/02

(54) **Air cleaner for motor-bicycle**

(30) Priority: 17.12.1992 JP 354780/92
(71) Applicant: HONDA GIKEN KOGYO KABUSHIKI KAISHA, Minato-ku Tokyo (JP)
(72) Inventor: Yamaguchi, Takashi, Wako-shi, Saitama (JP)
(74) Representative: Fincke, Karl Theodor, Dipl.-Phys. Dr.

(57) **Abstract**

[Object] To provide an air cleaner wherein an air intake duct does not extend downwardly of an air cleaner case.

[Construction] The interior of an air cleaner 11 surrounded at the side portions and the rear portion by a fuel tank approximately U-shaped in a flat view is partitioned in a dirty side chamber 31 and a clean side chamber 32 by a partitioning wall 30 provided at the mating portion between the upper air cleaner case 25 and the lower air cleaner case 26. An air intake duct 27 is provided integrally with the bottom portion within the lower air cleaner case 26. Further, an inlet 44 is opened to the bottom portion of the lower air cleaner 26, whereas an outlet 45 is opened within the dirty side chamber 31. Thus, the air intake duct 27 does not extend downwardly of the lower air cleaner case 26, and is prevented from interfering with the surrounding other parts.

## Description

### [Detailed Description of the Invention]

### [Applicable Industrial Field]

The present invention relates to an air cleaner for a motor-bicycle including an air intake duct with an inlet provided on the bottom side of an air cleaner case.

### [Prior Art]

Japanese Patent Laid-open No. SHO 61-255259 discloses an air cleaner provided over an engine, and covered with a fuel tank from the upper side, with an air intake duct extending in the direction of the engine from the lower portion of the air cleaner.

### [Problem to be Solved by the Invention]

In the above structure, the fuel tank must be removed for exchange of an element, and accordingly the maintenance is not easy. Further, since the air intake duct extends downwardly of the air cleaner, it must be disposed with care not to interfere with the other parts. This reduces the degree of freedom in design. Further, the above structure requires the separate air intake duct, resulting in the increased number of parts. Accordingly, an object of the present invention is to solve the above problem.

### [Means for Solving the Problem]

To achieve the above problem, according to the present invention, there is provided an air cleaner for a motor-bicycle comprising: an air cleaner case supported on a vehicular frame; an element provided in the air cleaner case; and an air intake duct for taking an atmospheric air in; wherein an inlet of the air intake duct is opened to the bottom portion side of the air cleaner case, and at least a part of the air cleaner case is surrounded by a fuel tank. In the above air cleaner, side portions and a rear portion of the air cleaner case are surrounded by the fuel tank approximately U-shaped in a plan view so that the element becomes exchangeable from the upper side; and the air intake duct is formed integrally with the bottom portion of the air cleaner case, and disposed within the air cleaner case.

### [Function of the Invention]

Since the side portions and the rear portion of the air cleaner case are surrounded by the fuel tank approximately U-shaped in a plan view, the upper side of the air cleaner case is not blocked, which enables the exchange of the element from the upper side of the air cleaner case, thus making easy the maintenance.

Further, since the air intake duct is provided integrally with the bottom portion within the air cleaner case, it does not interfere with the other parts under the air cleaner case. Further, the number of parts is reduced.

### [Embodiment]

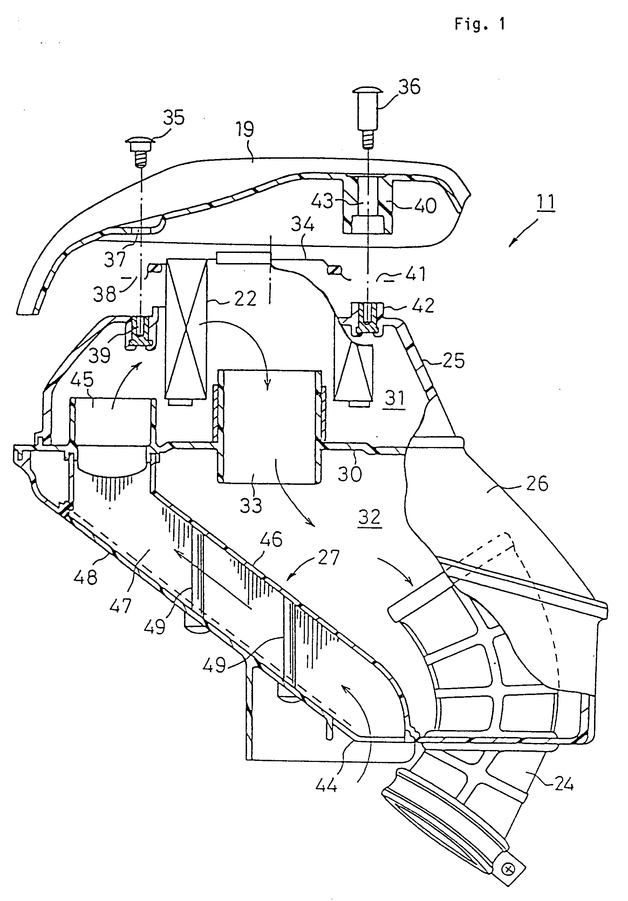

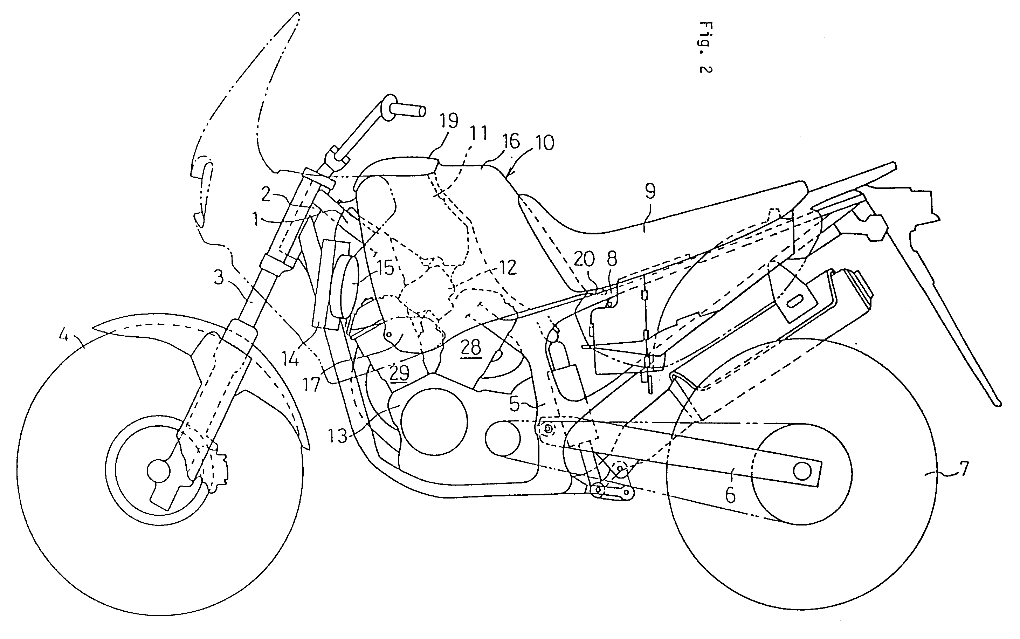

One embodiment will be described with reference to Figs. 1 to 6. Fig. 2 shows the shapes of essential parts on the side surface of a vehicular body of a motor-bicycle to which the present invention is applied. In this figure, on the front end portions of main frames 1 which are paired in the right and left and extend in the longitudinal direction, a front fork 3 is supported through a head pipe 2, and on the lower end portions of the main frames 1, a front wheel 4 is supported.

Pivot frames 5 are coupled with the rear portions of the main frames 1. A rear wheel 7 is supported on the rear end portions of rear arms 6 pivotably mounted on the pivot frames 5. A seat 9 is supported on seat rails 8 obliquely, upward, and rearward extending from the rear portions of the main frames 1.

On the main frames 1, a fuel tank 10 is supported, and an air cleaner 11 is supported in front of the fuel tank 10. A carbureter 12 is disposed under the air cleaner 11, and a V-type two cylinder engine 13 is disposed under the carbureter 12.

Radiators 14 are supported in the vicinity of the head pipe 2 forwardly of the engine 13. The radiators 14 are of a right and left divided type, and are provided to be paired in the right and left. They are mounted with cooling fans 15, respectively.

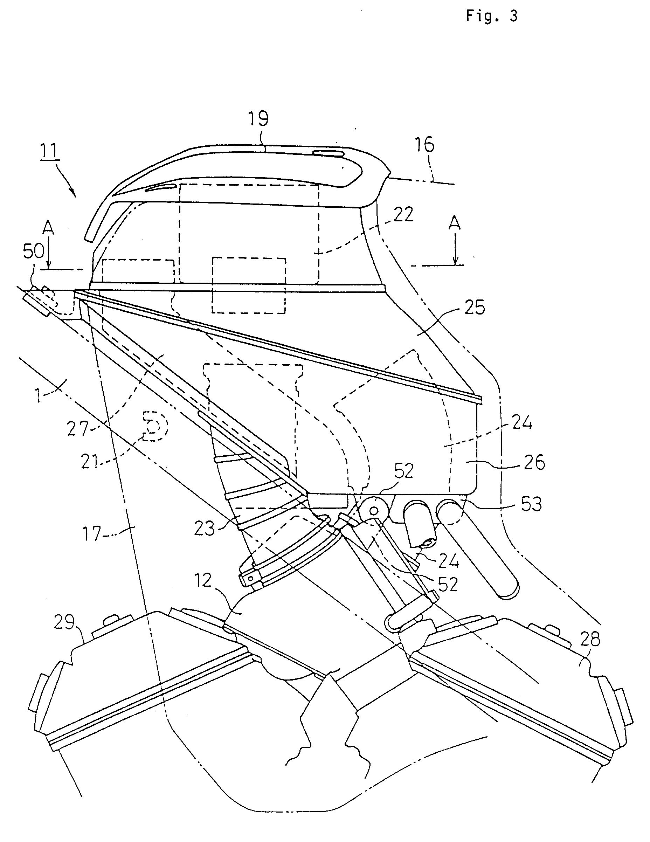

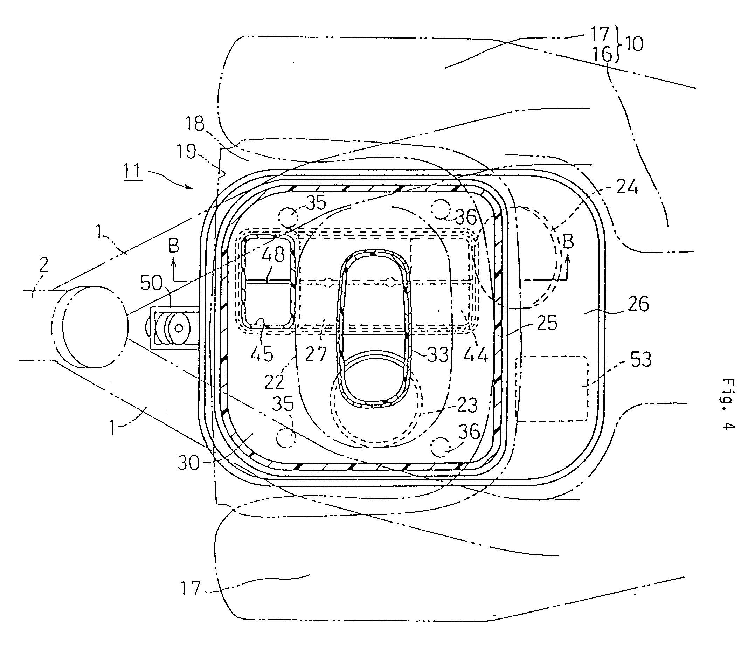

Fig. 3 is a view showing the shapes of essential parts mainly including the air cleaner 11; and Fig. 4 is a view showing the sectional shape taken along the line A-A of Fig. 3.

As is apparent from these figures, the fuel tank 10 integrally includes a main body portion 16 positioned in the back of the air cleaner 11, and sleeve portions 17 covering the right and left side portions of the air cleaner 11. Further, the fuel tank 10 is approximately U-shaped in a plan view (see Fig. 4). A space 18 opened in the front and vertical directions is formed by the surrounding main body portion 16 and the right and left sleeve portions 17.

The air cleaner 11 is contained in the space 18, and the upper side of the space 18 is blocked by a pressing member 19 mounted on the upper portion of the air cleaner 11. The pressing member 19 is a component of the air cleaner 11 and also functions as the appearance member continuous to the fuel tank 10.

The fuel tank 10 is mounted to the seat rails 8 by brackets 20 (Fig. 2) provided on the lower portion behind the main body portion 16, and is supported on the main frames 1 by locking portions 21 (see Fig. 3) provided on the inner sides of the right and left sleeve portions 17.

As is apparent from Fig. 3, the air cleaner 11 includes the pressing member 19, the element 22, the air cleaner case, and connecting tubes 23 and 24. The air cleaner case includes an upper air cleaner case 25 and a lower air cleaner case 26, and the air intake duct 27 is integrally formed inside the air cleaner case.

The lower end portions of the connecting tubes 23 and 24 are respectively connected to the upstream side passages of the carbureter 12 comprising two integral carbureters. The downstream side passages of the carbureter 12 are respectively connected to the intake passages of the corresponding cylinder out of a rear cylinder 28 and a front cylinder 29 of the engine 13.

Fig. 1 is a view showing the state where the air cleaner case is cut-away, and the pressing member 19 and the element 22 are exploded. As is apparent from this figure, the interior of the air cleaner is partitioned into a dirty side chamber 31 and a clean side chamber 32 by a partitioning wall 30 provided on the mating portion between the upper air cleaner case 25 and the lower air cleaner case 26, both chambers being interconnected to each other by way of an interconnecting passage 33.

The element 22 is fitted around the interconnecting passage 33 within the dirty side chamber 31. A mounting plate 34 is provided on the vertex portion of the element 22, and the surrounding of the mounting plate 34 is put between the vertex portion of the upper air cleaner case 25 and the pressing member 19. The vertex portion of the upper air cleaner case 25 and the pressing member 19 are longitudinally fastened to each other by bolts 35 and 36. The bolts 35 and 36 are each provided by two points in the right and left (see Fig. 4).

In addition, on the mounting side of the bolt 35, through-holes 37 and 38 and an insert nut 39 are formed on the corresponding positions of the pressing member 19, the mounting plate 34 and the upper cleaner case 25, respectively.

On the mounting side of the bolt 36, a boss 40, a though-hole 41 and an insert nut 42 are formed on the corresponding positions of the pressing member 19, the mounting plate 34 and the upper cleaner case 25, respectively. A though-hole 43 for the bolt 36 is formed on the boss 40.

Accordingly, by mounting of the pressing member 19, the element 22 is fixed, and concurrently the pressing member 19 covers the upper side of the air cleaner 11, and also functions as the appearance part for covering the upper side of the space 18 of the fuel tank 10. Further, by removing of the pressing member 19, the upper side of the space 19 is released, thereby making it possible to simply mount and remove the element 22 through the upper side of the air cleaner 11.

The air intake duct 27 is a tunnel-shaped air intake passage provided within the lower air cleaner case 26, and is vertically formed so as to be integrated with the bottom portion along the inclined bottom portion provided on the front side of the lower air cleaner case 26.

The inlet 44 of the air intake duct 27 is formed at the bottom portion of the lower air cleaner case 26 so as to be opened downward and forward. The upper end portion of the air intake duct 27 is connected to an opening portion formed on the partitioning wall 30, and the opening portion is interconnected to the outlet 45 projecting within the dirty side chamber 31.

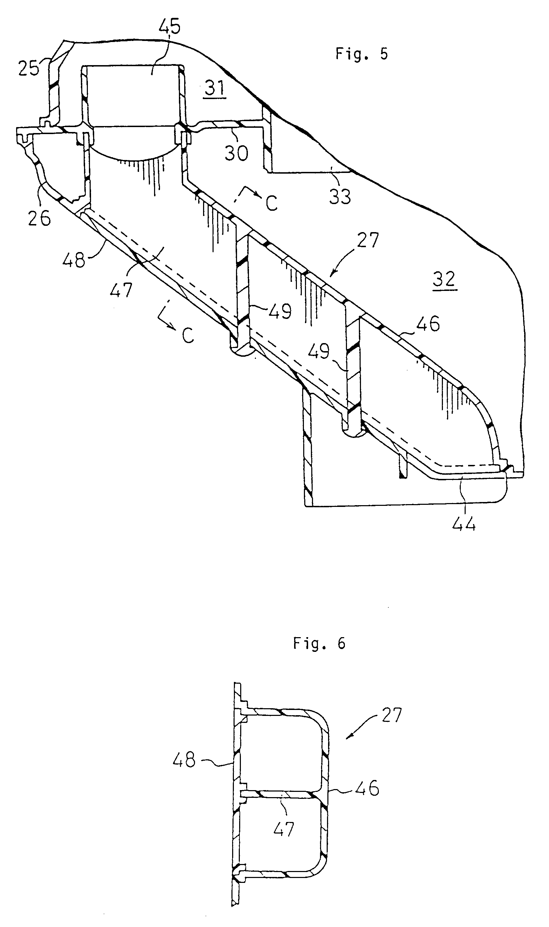

As shown in Figs. 5 and 6, as for an inner wall portion 46 of the air intake duct 27, when the lower air cleaner case 26 is molded, the bottom portion thereof is sunk to the clean side chamber 32 side, so that the inner wall portion 46 is formed integrally with the bulkhead 47.

The outside of the air intake duct 27 is in the state to be opened only by this molding; however, the opening portion is covered with a cover plate 48 after molding of the lower air cleaner case 26. The cover plate 48 is air-tightly mounted around the opening portion by a suitable method such as thermal fusing, and joined to the leading edges of ribs 49 formed on the bulkhead 47 by thermal caulking.

As shown in Figs. 1 and 3, the upstream end portion sides of the connecting tubes 23 and 24 enter within the clean side chamber 32 from the bottom portion of the lower air cleaner case 26, and as is apparent from Fig. 4, are mounted at the positions shifted to each other in the longitudinal and lateral directions of the lower air cleaner case 26 in correspondence to each cylinder to be connected.

As shown in Fig. 3, the supporting of the air cleaner 11 by the main frames 1 is performed in the following manner: namely, a bracket 50 provided on the front portion of the lower air cleaner case 26 is bolt-fitted to the main frames 1, and a bracket 51 provided on the side portion of the lower air cleaner case 26 is bolt-fitted to a stay 52 projecting from the main frames 1.

Further, as shown in Fig. 3, a breezer tank 53 is mounted on the bottom portion of the lower air cleaner case 26.

Next, the function of the embodiment will be described. In Fig. 1, as shown in the allow, an air flows from the inlet 44 opened at the bottom portion of the lower air cleaner case 26 on the clean side chamber 32 side within the air intake duct 27, directing upward, and enters within the dirty side chamber 31 from the outlet 45 .

Further, the air is filtered by the element 22 to becomes a clean air, and enters the clean side chamber 32 from the interconnecting passage 33. Subsequently the air is separated in the connecting tube 24 and the connecting tube 23 (not seen in this figure but seen in Fig. 3). Then, the air enters the carbureter 12 to be converted in an air-fuel mixture, to be thus supplied to the corresponding rear cylinder 28 or front cylinder 29.

At this time, since the air intake duct 27 is formed within the lower air cleaner case 26 and the inlet 44 side does not extend downwardly of the lower air cleaner case 26, as is apparent form Fig. 3, there is no fear that the air intake duct 27 interferes with the parts under the air cleaner 11, for example, the carbureter 12, the rear cylinder 28 and the front cylinder 29. Accordingly, it is possible to significantly increase the degree of freedom in design of the layout.

Further, the inlet 44 and the outlet 45 formed at both ends of the tunnel-like air intake duct 27 can be opened at relatively free positions by change in the shape of the air intake duct 27.

In addition, the essential parts of the air intake duct 27 are formed at the same time when the lower air cleaner case 26 is molded, and only the cover plate is mounted after molding, so that it is possible to easily form the air intake duct 27. Further, since the air intake duct 27 is not formed separately as conventional, it is possible to reduce the number of parts.

Further, since the pressing member 19 functions as a component of the air cleaner 11 for fixing the element 22 and as the appearance part for covering the upper side of the air cleaner 11, it is possible to reduce the number of the parts which have been separately required for each function, and to reduce the number of the mounting process therefor. In addition, only by removing the pressing member 19, it is possible to removably mount the element 22 to the air cleaner 11 from the upper side, thereby making easy the maintenance.

### [Effect of the Invention]

In the air cleaner for a motor-bicycle according to the present invention, since the air intake duct is provided integrally with the bottom portion within the air cleaner case, there can be eliminated the fear that the air cleaner interferes with the other parts under the air cleaner case. This makes it possible to significantly increase the degree of freedom in the design of the parts layout, and to reduce the number of parts.

Further, since the side portions and the rear portion of the air cleaner case are surrounded by the fuel tank approximately U-shaped in a plan view, the element can be removably mounted to the air cleaner from the upper side, thus making easy the maintenance.

### [Brief Description of the Drawings]

### [Fig. 1]

A view showing the state where the side surfaces of essential parts of an embodiment are cut-away, with parts partially exploded.

### [Fig. 2]

A side view of essential parts of a vehicular body of a motor-bicycle according to the embodiment.

### [Fig. 3]

A side view of essential parts of the embodiment.

### [Fig. 4]

A sectional view taken along the line A-A of Fig. 3.

### [Fig. 5]

A sectional view taken along the line B-B of Fig. 3.

### [Fig. 6]

A sectional view taken along the line C-C of Fig. 3.

### [Explanation of Symbols]

1 main frame, 10 fuel tank, 11 air cleaner, 12 carbureter, 13 engine, 16 main body portion, 17 sleeve portion, 19 pressing portion, 22 element, 23, 24 connecting tube, 25 upper air cleaner case, 26 lower air cleaner case, 27 air intake duct, 30 partitioning wall, 31 dirty side chamber, 32 clean side chamber, 44 inlet, 45 outlet

## Claims

1. In an air cleaner for a motor-bicycle comprising:
an air cleaner case supported on a vehicular frame;
an element provided in said air cleaner case; and
an air intake duct for taking an atmospheric air in;
wherein an inlet of said air intake duct is opened to the bottom portion side of said air cleaner case, and at least a part of said air cleaner case is surrounded by a fuel tank;
the improvement wherein
side portions and a rear portion of said air cleaner case are surrounded by said fuel tank approximately U-shaped in a plan view so that said element becomes exchangeable from the upper side; and
said air intake duct is formed integrally with the bottom portion of said air cleaner case, and disposed within said air cleaner case.
